# EUROPÄISCHE PATENTSCHRIFT

(11) **EP 0 660 142 B1**
(45) Veröffentlichungstag und Bekanntmachung des Hinweises auf die Patenterteilung: **28.04.1999**
(21) Anmeldenummer: 94120130.3
(22) Anmeldetag: 19.12.1994
(51) Int. Cl.: G02B 6/28

(54) **Optisches Kopplermodul**
Optical coupling module
Module de couplage optique

(30) Priorität: 22.12.1993 DE 4343943
(43) Veröffentlichungstag der Anmeldung: 28.06.1995
(73) Patentinhaber: SIEMENS AKTIENGESELLSCHAFT, 80333 München (DE)
(72) Erfinder: Finzel, Lothar, D-85716 Unterschleissheim (DE)

(56) Entgegenhaltungen:
- EP-A- 0 476 384
- EP-A- 0 493 132
- EP-A- 0 594 996
- DE-A- 4 208 403
- DE-A- 4 236 807
- DE-A- 4 307 155
- US-A- 4 373 776

## Beschreibung

Die Erfindung betrifft ein optisches Kopplermodul nach dem Oberbegriff des Anspruchs 1.

Bei optischen Kopplern, insbesondere bei kaskadierten Kopp-lern können die Dämpfungen an einzelnen Ausgängen sehr unterschiedlich sein. Hierdurch wird der Aufbau von optischen Netzen sehr erschwert. Da eine gewisse Minimaldämpfung erforderlich ist, müssen optische Dämpfungsglieder eingespleißt werden.

Aufgabe der Erfindung ist es, ein optisches Kopplermodul mit gleichen Dämpfungswerten zwischen seinem Eingang und seinen Ausgängen vorzusehen.

Diese Aufgabe wird durch ein Kopplermodul gemäß Anspruch 1 gelöst.

Vorteilhafte Weiterbildungen der Erfindung sind in den Unteransprüchen angegeben.

Besonders vorteilhaft ist die Vorkonfektionierung des Kopplermoduls. Dieses weist zwischen Eingängen und Ausgängen durch das Einfügen von Dämpfungsspleißen konstante Dämpfungswerte auf.

Bei kaskadierten Kopplern ist es zweckmäßig, bereits zwischen den einzelnen Kopplern Dämpfungsspleiße vorzusehen, um nur noch geringere Dämpfungsunterschiede durch die Dämpfungsspleiße in den Kopplerausgangsleitungen auszugleichen.

Besonders vorteilhaft ist es, wenn beim Anspleißen der Lichtwellenleiter des optisches Netzes die Spleiße als Dämpfungsspleiße ausgeführt werden. Über Biegekoppler kann die Dämpfung gemessen werden und ein geeignetes Schweißgerät entsprechend gesteuert werden.

Es ist zweckmäßig, wenn die Koppler mit einem Spleißschutz versehen in einer Kassette aufbewahrt werden. Selbstverständlich ist es auch möglich komplett vorgefertigte Kopplermodule zu verwenden, an deren Anschlüssen die Lichtwellenleiter des optischen Netzes beispielsweise mit einem mechanischen Spleiß oder einem thermischen Spleiß mit möglichst geringer Dämpfung angeschlossen werden.

Die Erfindung soll anhand von Figuren naher erläutert werden.

Es zeigen:
- Fig. 1: ein Prinzipschaltbild des erfindungsgemäßen Kopplermoduls,
- Fig. 2: das Kopplermodul mit Einrichtung zur Messung der Dämpfung und
- Fig. 3: ein in einer Kassette untergebrachtes Kopplermodul.

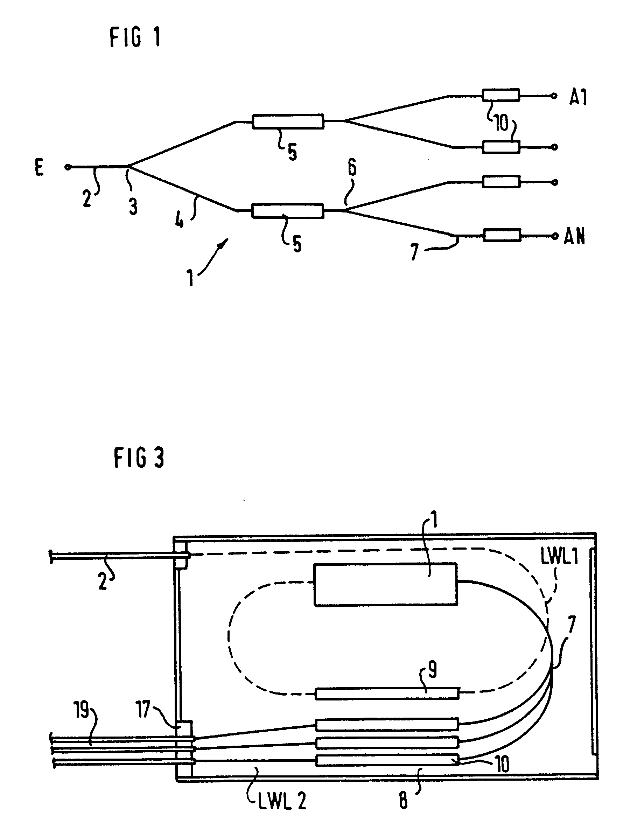

In Figur 1 ist das Prinzipschaltbild eines kaskadierten Kopplermoduls 1 dargestellt. Es besteht hier aus drei 1:2-Kopplern. Einem ersten, an den Eingang E des Kopplermoduls angeschalteten 1:2-Koppler 3 sind zwei weitere 1:2-Koppler 6 nachgeschaltet. Zwischen dem Kopplerausgang 4 des ersten Kopplers 3 und den nachgeschalteten Kopplern 6 ist jeweils ein Dämpfungsspleiß 5 eingeschaltet. Ebenso sind in die Ausgänge 7 der nachgeschalteten Koppler 6 weitere Dämpfungsspleiße 10 eingeschaltet, so daß die Dämpfung zwischen den Eingang E und allen Ausgängen A1 bis AN annähernd gleich ist. Dieses Kopplermodul einschließlich der Dämpfungsspleiße 5 und 10 wird komplett vorgefertigt.

Die ausgangsseitigen Dämpfungsglieder können beim Aufbau des optisches Netzes durch Dämpfungsspleiße ersetzt werden, durch die die Lichtwellenleiter angeschweißt werden.

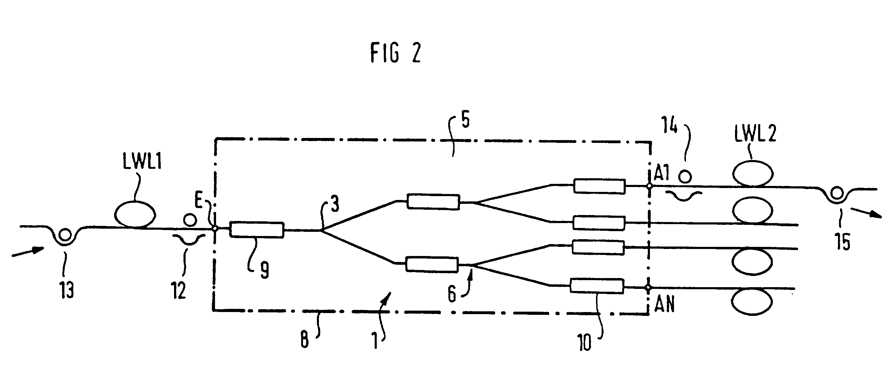

Figur 2 zeigt diesen Fall. In einer Kassette 8 ist das Kopplermodul untergebracht. An den Eingang E ist ein erster Lichtwellenleiter LWL1 angespleißt. Über eine Lichteinkopplungs-Anordnung 13 wird Licht eingespeist und in einem ersten Meßbiegekoppler 12 am Eingang des Kopplermoduls gemessen. Die Dämpfung der ausgangsseitigen Dämpfungsspleiße 10 wird jeweils durch Messung in einem zweiten Meßbiegekoppler 14 während des Spleißens gemessen und durch Steuerung eines Schweißgeräts wird der gewünschte Dämpfungswert erreicht. Zur Vermeidung von Fehlmessungen kann eine Lichtauskopplungs-Anordnung 15 eingeschaltet werden.

In einer älteren Anmeldung mit dem amtlichen Aktenzeichen P 42 36 806.5 ist die Herstellung eines optischen Dämpfungsgliedes und ein Verfahren zu seiner Herstellung mittels eines geeigneten thermischen Spleißgerätes beschrieben.

Figur 3 zeigt die Kassette 8, in der das Kopplermodul 1, der Eingangsspleiß 9 und die ausgangsseitigen Dämpfungsspleiße 10 angeordnet sind. Nach dem Anspleißen der Eingang- und Ausgangs-Lichtwellenleiter LWL1 und LWL2 werden die Spleiße in der Kassette abgelegt und die Eingangsader 2 bzw. die Ausgangsadern 19 in Zugabfangungen 17 festgelegt.

## Patentansprüche

1. Optisches Kopplermodul (1) mit einer Eingangsleitung (E) und einer Vielzahl damit verbundener Ausgangsleitungen (A1...AN),
**dadurch gekennzeichnet,**
daß in den Koppler-Ausgangsleitungen (7) Dämpfungsspleiße (10) vorgesehen sind, so daß die Dämpfungswerte zwischen Eingang und allen Ausgängen annähernd gleich sind.

2. Optisches Kopplermodul (1) nach Anspruch 1,
**dadurch gekennzeichnet,**
daß in den Verbindungsleitungen (4) zwischen kaskadierten Kopplern (3, 6) Dämpfungsspleiße (5) vorgesehen sind.

3. Optisches Kopplermodul nach Anspruch 1 oder 2,
**dadurch gekennzeichnet,**
daß der Dämpfungswert der ausgangsseitigen Dämpfungsspleiße (10) jeweils entsprechend einer Dämpfungsmessung zwischen Eingang (E) und dem jeweiligen Ausgang (z.B. Al) festgelegt wird.

4. Optisches Kopplermodul nach Anspruch 3,
**dadurch gekennzeichnet,**
daß Dampfungsspleiße (10) mit der erforderlichen Dämpfung eingefügt werden.

5. Optisches Kopplermodul nach Anspruch 3,
**dadurch gekennzeichnet**,
daß der zum Anspleißen der ausgangsseitigen Lichtwellenleiter (LWL2) vorgesehene Spleiß als Dämpfungsspleiß (10) ausgeführt wird.

6. Optisches Kopplermodul nach einem der vorhergehenden Ansprüche,
**dadurch gekennzeichnet,**
daß das Kopplermodul (1) ein Eingangsspleiß (9) und die Dämpfungsspleiße in einer Kassette (8) angeordnet sind.

## Claims

1. Optical coupler module (1) having an input line (E) and a multiplicity of output lines (A1...AN) connected thereto, characterized in that damping splices (10) are provided in the coupler output lines (7) so that the attenuation values between the input and all the outputs are approximately equal.

2. Optical coupler module (1) according to Claim 1, characterized in that damping splices (5) are provided in the connecting lines (4) between cascaded couplers (3, 6).

3. Optical coupler module according to Claim 1 or 2, characterized in that the attenuation value of the output-side damping splices (10) is fixed in each case in accordance with an attenuation measurement between the input (E) and the respective output (for example A1).

4. Optical coupler module according to Claim 3, characterized in that damping splices (10) with the required attenuation are inserted.

5. Optical coupler module according to Claim 3, characterized in that the splice provided for splicing the output-side optical fibres (LWL2) is designed as a damping splice (10).

6. Optical coupler module according to one of the preceding claims, characterized in that the coupler module (1) is an input splice (9), and the damping splices are arranged in a cassette (8).

## Revendications

1. Module (1) de couplage optique, ayant une ligne (E) d'entrée et un grand nombre de lignes (A1...AN) de sortie qui y sont reliées, caractérisé,
en ce qu'il est prévu, dans les lignes (7) de sortie du coupleur, des épissures (10) d'affaiblissement de manière que les indices d'affaiblissement soient à peu près les mêmes entre l'entrée et toutes les sorties.

2. Module (1) de couplage optique suivant la revendication 1,
caractérisé,
en ce qu'il est prévu des épissures (5) d'affaiblissement dans les lignes (4) de liaison entre des coupleurs (3, 6) en cascade.

3. Module (1) de couplage optique suivant la revendication 1 ou 2,
caractérisé,
en ce que l'indice d'affaiblissement de l'épissure (10) d'affaiblissement du côté sortie est fixé en fonction d'une mesure d'affaiblissement entre l'entrée (1) et la sortie (par exemple A1) concernée.

4. Module (1) de couplage optique suivant la revendication 3,
caractérisé,
en ce qu'il est inséré des épissures (10) d'affaiblissement ayant l'affaiblissement nécessaire.

5. Module (1) de couplage optique suivant la revendication 3,
caractérisé,
en ce que l'épissure prévue pour épisser les lignes (LWL2) de guides d'ondes du côté de la sortie sont sous la forme d'une épissure (10) d'affaiblissement.

6. Module (1) de couplage optique suivant l'une des revendications précédentes,
caractérisé en ce que le module (1) de couplage, une épissure (9) d'entrée et les épissures d'affaiblissement sont disposés dans une cassette (8).
